# EUROPÄISCHE PATENTSCHRIFT

(11) **EP 2 729 342 B1**
(45) Veröffentlichungstag und Bekanntmachung des Hinweises auf die Patenterteilung: **06.04.2016**
(21) Anmeldenummer: 12728246.5
(22) Anmeldetag: 14.06.2012
(51) Int. Cl.: B61K 7/02, B61K 7/04, B61K 7/00, B61K 7/08, B60T 17/22

(54) **GLEISBREMSE MIT ZUMINDEST EINEM VERTIKAL BEWEGLICHEN BREMSELEMENT SOWIE VERFAHREN ZUM ERMITTELN DER JEWEILIGEN LAGE DESSELBEN**
TRACK BRAKE WITH AT LEAST ONE VERTICALLY MOVABLE BRAKING ELEMENT AND METHOD FOR DETERMINING THE RESPECTIVE POSITION THEREOF
FREIN DE VOIE COMPORTANT AU MOINS UN ÉLÉMENT FREIN MOBILE VERTICALEMENT ET PROCÉDÉ DE DÉTERMINATION DE LA POSITION RESPECTIVE DE L'ÉLÉMENT FREIN

(30) Priorität: 05.07.2011 DE 102011078692
(43) Veröffentlichungstag der Anmeldung: 14.05.2014
(73) Patentinhaber: Siemens Aktiengesellschaft, 80333 München (DE)
(72) Erfinder: SKIBBE, Sven, 38528 Adenbüttel (DE)
(86) Internationale Anmeldenummer: PCT/EP2012/061359
(87) Internationale Veröffentlichungsnummer: WO 2013/004468

(56) Entgegenhaltungen:
- DE-A1- 3 626 390
- DE-C- 551 525
- US-A- 1 635 989

## Beschreibung

Die Erfindung betrifft eine Gleisbremse mit zumindest einem vertikal beweglichen, insbesondere absenkbaren Bremselement.

Bei Gleisbremsen handelt es sich um mechanische Bremseinrichtungen, die in rangiertechnischen Ablaufanlagen für eine Steuerung der Geschwindigkeit der ablaufenden Einheiten in Form von einzelnen Wagen oder Wagengruppen verwendet werden. In Abhängigkeit von der jeweiligen Ausprägung der Anlage sowie der jeweiligen Funktion der Gleisbremse werden hierbei unterschiedliche Arten von Gleisbremsen eingesetzt. So sind als Talbremsen und Richtungsgleisbremsen insbesondere Balkenbremsen beziehungsweise Balkengleisbremsen gebräuchlich. Bei diesen erfolgt eine Verzögerung der ablaufenden Wagen dadurch, dass Bremsbalken seitlich gegen die Räder gepresst werden. Hingegen werden in den Richtungsgleisen angeordnete Gefälleausgleichsbremsen häufig als Kleinstbremsen mit kolbenförmigen Elementen ausgebildet, die beim Überfahren durch ein Rad eines Schienenfahrzeugs niedergedrückt werden und hierdurch Energie absorbieren.

Unabhängig von der Art der jeweiligen Gleisbremse kann es wünschenswert beziehungsweise erforderlich sein, dass einzelne Bremselemente der Gleisbremsen vertikal beweglich, dass heißt insbesondere absenkbar beziehungsweise höhenverstellbar, ausgeführt sind. In Abhängigkeit von der jeweiligen Ausführungsform der Gleisbremse kann hierdurch einerseits eine Aktivierung beziehungsweise Deaktivierung des betreffenden Bremselementes beziehungsweise der Gleisbremse erfolgen. Andererseits besteht hierbei beispielsweise die Möglichkeit, das zumindest eine vertikale Bremselement abzusenken, um hierdurch eine Befahrung der Gleisbremse durch ein Triebfahrzeug zu ermöglichen.

Eine Gleisbremse der eingangs genannten Art mit zumindest einem vertikal beweglichen Bremselement ist beispielsweise aus der deutschen Offenlegungsschrift DE 36 26 390 A1 bekannt. Diese beschreibt eine Gleisbremse in Form einer Balkenbremse mit vertikal beweglichen Bremselementen in Form von absenkbaren Bremsbalken. Dabei ist die Gleisbremse in einer abgesenkten Endlage der Bremsbalken nicht nur unwirksam, sondern auch profilfrei, so dass Fahrzeuge die Bremse befahren können, die die Gleisbremse in angehobener Endlage des Bremsbalkens wegen hierdurch verursachter Beschädigungen des Fahrzeugs und/oder der Gleisbremse nicht befahren können beziehungsweise dürfen. Zur Überwachung der oberen und der unteren Endlage der Bremsbalken weist die bekannte Gleisbremse einen Sensor auf, der vorzugsweise als induktiver Näherungsschalter ausgebildet ist und mit mindestens einer Steuerstange zusammenwirkt, die mechanisch mit einem Bremsbalken verbunden ist und Mittel zur Aktivierung des Sensors in den beiden Endlagen der Steuerstange aufweist.

Der vorliegenden Erfindung liegt die Aufgabe zugrunde, eine Gleisbremse mit zumindest einem vertikal beweglichen, insbesondere absenkbaren Bremselement anzugeben, die eine Ermittlung der jeweiligen Lage des zumindest einen vertikal beweglichen Bremselements auf vergleichsweise einfache und zugleich besonders zuverlässige Art und Weise ermöglicht.

Diese Aufgabe wird erfindungsgemäß gelöst durch eine Gleisbremse mit zumindest einem vertikal beweglichen, insbesondere absenkbaren Bremselement, wobei die Gleisbremse einen Neigungssensor aufweist, der derart angeordnet ist, dass anhand zumindest eines Messwertes des Neigungssensors die jeweilige Lage des zumindest einen vertikal beweglichen Bremselements ermittelbar ist.

Die erfindungsgemäße Gleisbremse zeichnet sich somit dadurch aus, dass sie einen Neigungssensor aufweist, der es aufgrund seiner Anordnung ermöglicht, anhand zumindest eines von ihm erfassten Messwertes die jeweilige Lage des zumindest einen vertikal beweglichen Bremselements zu ermitteln. Im Rahmen der vorliegenden Erfindung wird hierbei unter einem Neigungssensor allgemein eine Sensoreinrichtung verstanden, die zur Ermittlung eines die vertikale Ausrichtung des zumindest einen vertikal beweglichen Bremselements unmittelbar oder mittelbar angegebenen Messwertes geeignet ist. Dabei kann ein solcher Neigungssensor die vertikale Ausrichtung nach einem beliebigen, für sich bekannten Messprinzip ermitteln. Entsprechende Neigungssensoren sind beispielsweise in Form von zur Messung einwirkender statischer Beschleunigungen, d.h. insbesondere der Erdbeschleunigung beziehungsweise Erdschwerebeschleunigung, ausgebildeten Beschleunigungssensoren aus dem Stand der Technik bekannt und auf dem Markt vergleichsweise kostengünstig verfügbar. Die Erfindung macht sich hierbei zu Nutze, dass bei einer Gleisbremse mit einem vertikal beweglichen Bremselement in der Regel ein Neigungssensor derart angeordnet werden kann, dass anhand seines Messwertes beziehungsweise seiner Messwerte eine Aussage über die jeweilige Lage des zumindest einen vertikal beweglichen Bremselements möglich ist.

Die erfindungsgemäße Gleisbremse weist den Vorteil auf, dass ein Neigungssensor auf vergleichsweise einfache Art und Weise an oder in einer Komponente der Gleisbremse angeordnet werden kann, ohne dass hierfür aufwändige konstruktive Maßnahmen erforderlich sind. Hierdurch wird nicht nur der Aufwand für die Herstellung der Gleisbremse beziehungsweise für die Realisierung der Überwachung beziehungsweise Ermittlung ihres jeweiligen Zustands, d.h. der jeweiligen Lage des zumindest einen vertikal beweglichen Bremselements, reduziert, sondern darüber hinaus auch die Robustheit beziehungsweise Zuverlässigkeit der Gleisbremse erhöht.

An dieser Stelle sei darauf hingewiesen, dass die erfindungsgemäße Gleisbremse selbstverständlich auch mehrere Neigungssensoren aufweisen kann. Dabei kann beispielsweise im Falle mehrerer vertikal beweglicher Bremselemente jeweils ein Neigungssensor zur Ermittlung beziehungsweise Überwachung der jeweiligen Lage eines der Bremselemente vorgesehen sein. Des Weiteren besteht beispielsweise auch die Möglichkeit, dass zur weiteren Erhöhung der Zuverlässigkeit und Ausfallsicherheit auch für ein einzelnes vertikal bewegliches Bremselement mehrere Neigungssensoren vorgesehen sind.

Bei dem vertikal beweglichen Bremselement kann es sich insbesondere um eine solche Komponente der Gleisbremse handeln, die durch Kontakt mit den Rädern von ablaufenden Einheiten diesen Energie entzieht und damit bremst. So kann es sich bei dem vertikal beweglichen Bremselement im Falle einer Balkenbremse beispielsweise um absenkbare beziehungsweise höhenverstellbare Bremsbalken und im Falle einer Gefälleausgleichsbremse beispielsweise um eine hydraulische Bremse beziehungsweise ein kolbenförmiges Element einer solchen handeln. Grundsätzlich ist es hierbei möglich, dass der Neigungssensor unmittelbar an oder in dem jeweiligen vertikal beweglichen Bremselement angeordnet ist.

Gemäß einer besonders bevorzugten Weiterbildung der erfindungsgemäßen Gleisbremse ist der Neigungssensor an oder in einem sich von dem zumindest einen vertikal beweglichen Bremselement unterscheidenden weiteren Element der Gleisbremse angeordnet. Dies ist vorteilhaft, da eine Anordnung des Neigungssensors unmittelbar an oder in dem zumindest einen vertikal beweglichen Bremselement in der Praxis häufig nicht oder nur mit erheblichem Aufwand möglich ist. So ist es einerseits beispielsweise denkbar, dass eine Anordnung des Neigungssensors an oder in dem zumindest einen vertikal beweglichen Bremselement aus konstruktiven Gründen schwierig oder nicht möglich ist. Andererseits kann auch die Zuverlässigkeit des Neigungssensors selbst in diesem Fall beeinträchtigt sein. Durch eine Anordnung des Neigungssensors an oder in einem sich von dem zumindest vertikal beweglichen Bremselement unterscheidenden weiteren Element der Gleisbremse ist es somit vorteilhafterweise möglich, unter Berücksichtigung der jeweiligen Umstände und Gegebenheiten einen besonders günstigen Montageort für den Neigungssensor zu wählen. Voraussetzung hierfür ist lediglich, dass der Neigungssensor derart angeordnet ist, dass seine Messwerte eine Aussage zur jeweiligen Lage des zumindest einen vertikal beweglichen Bremselements erlauben. Dies kann beispielsweise dadurch sichergestellt werden, dass der Neigungssensor auf oder in einem weiteren Element der Gleisbremse angeordnet wird, das mechanisch mit dem vertikal beweglichen Bremselement verbunden ist und seine Neigung in Abhängigkeit von der jeweiligen Lage des zumindest einen vertikal beweglichen Bremselements ändert.

Grundsätzlich kann es sich bei der erfindungsgemäßen Gleisbremse um eine Gleisbremse beliebiger Art handeln.

Gemäß einer besonders bevorzugten Ausführungsform der erfindungsgemäßen Gleisbremse ist die Gleisbremse eine Balkenbremse. Dies ist vorteilhaft, da Balkenbremsen in rangiertechnischen Ablaufanlagen weit verbreitet sind und häufig vertikal bewegliche Bremselemente in Form von Bremsbalken aufweisen.

Vorzugsweise kann die erfindungsgemäße Gleisbremse hierbei derart weitergebildet sein, dass der Neigungssensor an oder in einem Federpaket der Balkenbremse angeordnet ist. Dies ist vorteilhaft, da sich die Bremsbalken von Balkenbremsen üblicherweise an elastischen Federpaketen abstützen, die sich über eine Bremsensteuerung vorspannen lassen, so dass auf die Balkenbremse durchlaufende Fahrzeugräder unterschiedliche Bremskräfte ausgeübt werden können. Vorteilhafterweise weisen die Federpakte der Balkenbremse hierbei einen gewissen Abstand zu den Schienen beziehungsweise den vorbeilaufenden Wagen beziehungsweise Wagengruppen auf, so dass der Neigungssensor bei einer Anordnung an oder in einem Federpaket der Balkenbremse gegenüber mechanischen Einflüssen vergleichsweise geschützt ist. Darüber hinaus sind die Federpakete aus konstruktiven Gründen üblicherweise derart mechanisch mit den vertikal beweglichen Bremselementen einer Balkenbremse in Form der Bremsbalken verbunden, dass aus der Neigung der Federpakete, d.h. anhand zumindest eines Messwertes eines an oder in einem Federpaket der Gleisbalkenbremse angeordneten Neigungssensors, die jeweilige Lage des Bremsbalkens beziehungsweise der Bremsbalken ermittelbar ist.

Gemäß einer weiteren besonders bevorzugten Ausführungsform der erfindungsgemäßen Gleisbremse ist die Gleisbremse eine Gefälleausgleichsbremse. Dies ist vorteilhaft, da Gefälleausgleichsbremsen, die beispielsweise als Schraubengleisbremsen oder so genannte Dowty-Retarder ausgebildet sein können, in rangiertechnischen Ablaufanlagen zur Geschwindigkeitsregulierung in den Richtungsgleisen weit verbreitet sind. Dabei weisen entsprechende Gefälleausgleichsbremse üblicherweise zu ihrer Aktivierung beziehungsweise Deaktivierung oder auch zur Ermöglichung einer Überfahrt von Triebfahrzeugen vertikal bewegliche Bremselemente etwa in Form von hydraulischen Bremszylindern auf.

Vorzugsweise kann die erfindungsgemäße Gleisbremse hierbei weiterhin derart weitergebildet sein, dass der Neigungssensor an oder in einer Absenkeinrichtung der Gefälleausgleichsbremse angeordnet ist. Dies ist vorteilhaft, da die Neigung beziehungsweise Lage einer Absenkeinrichtung einer Gefälleausgleichsbremse, dass heißt eines Elements, das beispielweise zum Absenken des hydraulischen Bremszylinders dient, üblicherweise eine Aussage über die jeweilige Lage des zumindest einen vertikal beweglichen Bremselements in Form des hydraulischen Bremszylinders der Gefälleausgleichsbremse erlaubt.

Vorzugsweise kann die erfindungsgemäße Gleisbremse weiterhin derart ausgestaltet sein, dass der Neigungssensor zum Übermitteln des zumindest einen Messwertes an eine Auswerte-Einrichtung ausgebildet ist. Dies bietet den Vorteil, dass die Ermittlung der jeweiligen Lage des zumindest einen vertikal beweglichen Bremselements nicht durch den Neigungssensor selbst erfolgen muss, sondern durch eine gegebenenfalls völlig separate Komponente erfolgen kann. Vorteilhafterweise kann eine entsprechende Auswerte-Einrichtung dabei beispielsweise Bestandteil einer Steuereinrichtung einer rangiertechnischen Anlage in Form einer Ablaufanlage sein.

Die vorliegende Erfindung betrifft des Weiteren ein Verfahren zum Ermitteln der jeweiligen Lage zumindest eines vertikal beweglichen, insbesondere absenkbaren Bremselements einer Gleisbremse.

Hinsichtlich des Verfahrens liegt der vorliegenden Erfindung die Aufgabe zugrunde, ein vergleichsweise einfach realisierbares und zugleich besonders zuverlässiges Verfahren zum Ermitteln der jeweiligen Lage zumindest eines vertikal beweglichen, insbesondere absenkbaren Bremselements einer Gleisbremse anzugeben.

Diese Aufgabe wird erfindungsgemäß gelöst durch ein Verfahren zum Ermitteln der jeweiligen Lage zumindest eines vertikal beweglichen, insbesondere absenkbaren Bremselements einer Gleisbremse, wobei durch einen Neigungssensor zumindest ein Messwert erfasst wird und aus dem zumindest einen Messwert die jeweilige Lage des zumindest einen vertikal beweglichen Bremselements ermittelt wird.

Die Vorteile des erfindungsgemäßen Verfahrens entsprechen denjenigen der erfindungsgemäßen Gleisbremse, so dass diesbezüglich auf die entsprechenden vorstehenden Ausführungen verwiesen wird. Gleiches gilt hinsichtlich der im Folgenden aufgeführten bevorzugten Weiterbildungen des erfindungsgemäßen Verfahrens im Hinblick auf die entsprechenden bevorzugten Weiterbildungen der erfindungsgemäßen Gleisbremse, so dass auch diesbezüglich auf die entsprechenden vorstehenden Erläuterungen verwiesen wird.

Vorzugsweise kann das erfindungsgemäße Verfahren derart ablaufen, dass der Messwert durch einen an oder in einem sich von dem zumindest einen vertikal beweglichen Bremselement unterscheidenden weiteren Element der Gleisbremse angeordneten Neigungssensor erfasst wird.

Gemäß einer weiteren besonders bevorzugten Ausführungsform des erfindungsgemäßen Verfahrens wird die jeweilige Lage zumindest eines vertikal beweglichen Elements einer Gleisbremse in Form einer Balkenbremse ermittelt.

Vorzugsweise ist das erfindungsgemäße Verfahren hierbei weiterhin derart ausgestaltet, dass der zumindest eine Messwert durch einen an oder in einem Federpaket der Balkenbremse angeordneten Neigungssensor erfasst wird.

Gemäß einer besonders bevorzugten Weiterbildung des erfindungsgemäßen Verfahrens wird die jeweilige Lage zumindest eines vertikal beweglichen Elements einer Gleisbremse in Form einer Gefälleausgleichsbremse ermittelt.

Vorzugsweise kann das erfindungsgemäße Verfahren hierbei weiterhin derart ausgeprägt sein, dass der zumindest eine Messwert durch einen an oder in einer Absenkeinrichtung der Gefälleausgleichsbremse angeordneten Neigungssensor erfasst wird.

Vorzugsweise ist das erfindungsgemäße Verfahren derart weitergebildet, dass der zumindest eine Messwert an eine Auswerte-Einrichtung übermittelt wird.

Gemäß einer weiteren besonders bevorzugten Ausführungsform des erfindungsgemäßen Verfahrens wird ein die jeweilige Lage des zumindest einen vertikal beweglichen Elements der Gleisbremse identifizierendes Signal von der Auswerte-Einrichtung an eine Überwachungs-Einrichtung übermittelt. Hierbei ist es beispielsweise denkbar, dass die Auswerte-Einrichtung als Bestandteil des Neigungssensors oder der Gleisbremse ausgebildet ist und die Überwachungs-Einrichtung eine Komponente einer Steuereinrichtung der rangiertechnischen Anlage ist.

Im Folgenden wird die Erfindung anhand von Ausführungsbeispielen näher erläutert. Hierzu zeigt
- Figur 1: in einer schematischen Skizze ein erstes Ausführungsbeispiel der erfindungsgemäßen Gleisbremse in Form einer Balkenbremse in einem aktiven Zustand,
- Figur 2: in einer schematischen Skizze die Gleisbremse gemäß dem Ausführungsbeispiel der Figur 1 in einem inaktiven Zustand,
- Figur 3: in einer schematischen Skizze ein zweites Ausführungsbeispiel der erfindungsgemäßen Gleisbremse in Form einer Gefälleausgleichsbremse in einem aktiven Zustand und
- Figur 4: in einer schematischen Skizze die Gleisbremse gemäß dem Ausführungsbeispiel der Figur 3 in einem inaktiven Zustand.

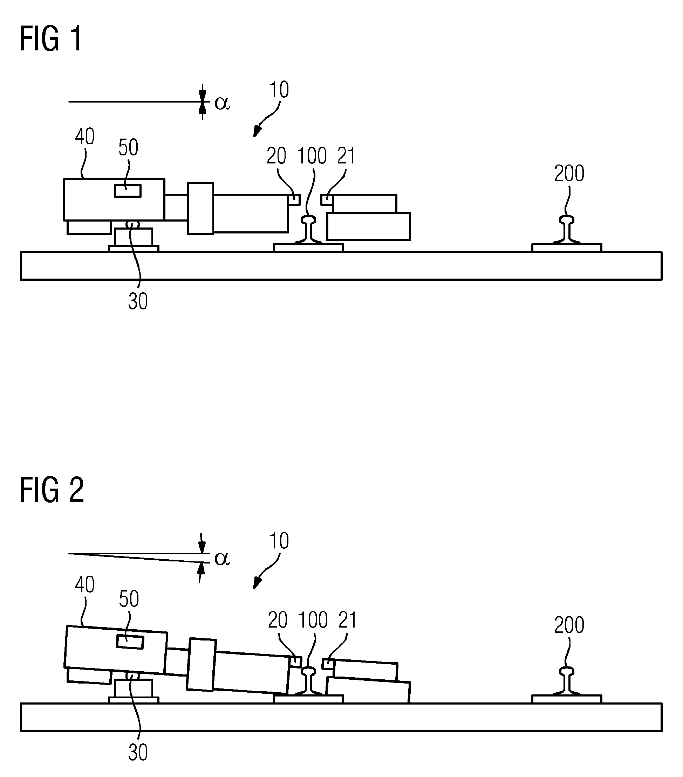

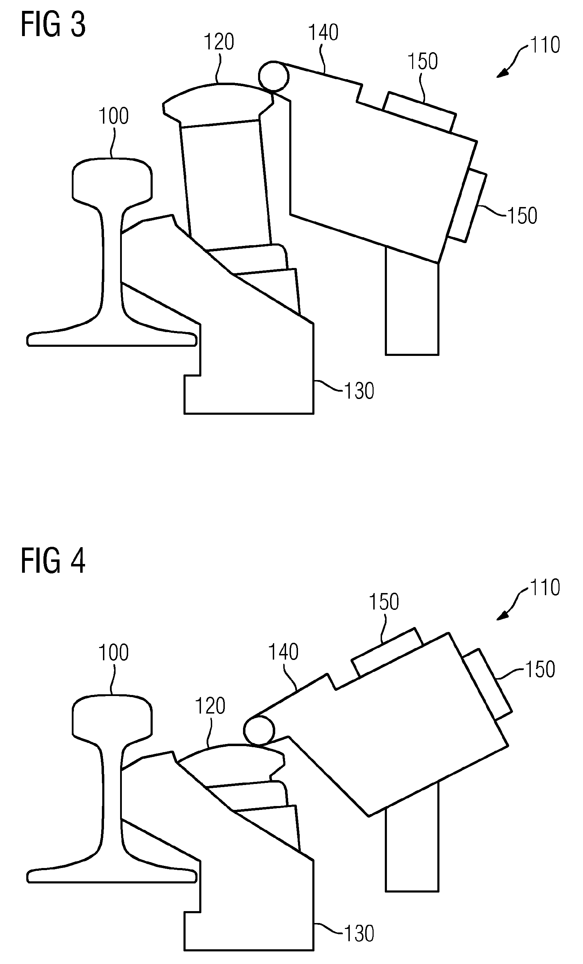

In den Figuren 1 und 2 beziehungsweise in den Figuren 3 und 4 sind aus Gründen der Übersichtlichkeit jeweils identische Komponenten mit denselben Bezugszeichen gekennzeichnet.

Figur 1 zeigt in einer schematischen Skizze ein erstes Ausführungsbeispiel der erfindungsgemäßen Gleisbremse in Form einer Balkenbremse in einem aktiven Zustand. Dargestellt ist eine Balkenbremse 10, die einen äußeren Bremsbalken 20 sowie einen inneren Bremsbalken 21 aufweist, die im Bereich einer Schiene 100 derart angeordnet sind, dass die Räder von die Balkenbremse 10 durchlaufenden Wagen beziehungsweise Wagengruppen durch Wechselwirkung mit den Bremsbalken 20, 21 abgebremst werden.

Es sei darauf hingewiesen, dass in der Figur 1 aus Gründen der Übersichtlichkeit lediglich eine einseitige Balkenbremse 10 gezeigt ist. Unabhängig hiervon könnte die Balkenbremse 10 selbstverständlich auch als zweiseitige Balkenbremse ausgeführt sein, in welchem Fall auch für die zweite Schiene 200 eine entsprechende Bremseinrichtung vorgesehen wäre.

Entsprechend der Darstellung der Figur 1 weist die Balkenbremse 10 weiterhin einen Umlenkpunkt 30 auf, auf den sich ein Federpaket 40 abstützt. Mittels des Federpakets 40 ist es hierbei möglich, die Bremsbalken 20, 21 mit einer steuerbaren Andrückkraft zu beaufschlagen und damit die auf die Räder einwirkende Bremskraft zu steuern.

Um eine möglichst große Bremsleistung zu erzeugen, ist es für ein Abbremsen vorbeilaufender Räder zweckmäßig, dass die Bremsbalken 20, 21 möglichst hoch an den Räder angreifen. Dies führt dazu, dass es einem Triebfahrzeug, etwa in Form einer Rangierlokomotive, in dem in der Figur 1 dargestellten aktiven Zustand der Balkenbremse nicht möglich ist, die Balkenbremse 10 zu passieren. Zur Vermeidung entsprechender betrieblicher Einschränkungen bei gleichzeitig bestmöglichem Angriffspunkt der Bremsbalken 20, 21 sind die Bremsbalken 20, 21 der Balkenbremse 10 derart als vertikal bewegliche Bremselemente ausgebildet, dass sie über den Umlenkpunkt 30 drehbar gelagert sind. Im in der Figur 1 dargestellten aktiven Zustand, d.h. für den Fall, dass die Bremsbalken 20, 21 eine obere Endlage einnehmen, weisen die Bremsbalken 20, 21 hierbei einen Winkel zur Horizontalen von α = 0° auf.

Um eine zuverlässige und zugleich vergleichsweise einfach realisierbare Ermittlung beziehungsweise Überwachung der jeweiligen Lage der vertikal beweglichen Bremselemente in Form der Bremsbalken 20, 21 zu ermöglichen, weist die Gleisbremse 10 gemäß dem Ausführungsbeispiel der Figur 1 des Weiteren einen Neigungssensor 50 auf. Dieser erlaubt es, mittels für sich bekannter Verfahren den Neigungswinkel α zu ermitteln. Darüber hinaus kann der Neigungssensor 50 auch als Neigungsschalter ausgebildet sein, der in Abhängigkeit von dem jeweiligen Neigungswinkel, d.h. etwa bei Überschreitung beziehungsweise Unterschreitung eines vorgegebenen Neigungswinkels, eine Schalthandlung auslöst.

Entsprechend der Darstellung der Figur 1 ist der Neigungssensor 50 nicht unmittelbar an den Bremsbalken 20, 21, sondern an dem Federpaket 40 angeordnet. Dies bietet den Vorteil, dass eine Beeinträchtigung der Funktion der Bremsbalken 20, 21 vermieden und zugleich der Neigungssensor 50 vor mechanischen Beanspruchungen beziehungsweise Beschädigungen durch vorbeirollende Räder von Schienenfahrzeugen geschützt wird.

Figur 2 zeigt in einer schematischen Skizze die Gleisbremse gemäß dem Ausführungsbeispiel der Figur 1 in einem inaktiven Zustand. Dies bedeutet, dass die Balkenbremse 10 in Figur 2 im Unterschied zu Figur 1 mit abgesenkten Bremsbalken 20, 21 gezeigt ist. Entsprechend der Darstellung der Figur 2 sind die Bremsbalken 20, 21 hierzu ausgehend von der Darstellung der Figur 1 durch eine Drehung um den Umlenkpunkt 30 in eine abgesenkte Position überführt worden. Des Weiteren ist die Balkenbremse 10 in der Darstellung der Figur 2 völlig geöffnet, so dass der Abstand zwischen den Bremsbalken 20, 21 im Vergleich zu Figur 1 vergrößert ist.

Gemäß der Darstellung der Figur 2 weisen die Bremsbalken 20, 21 sowie das Federpaket 40 in der dargestellten Situation einen Neigungswinkel α von etwa 3,5° auf. Anhand eines entsprechenden Messwertes des Neigungssensors 50 ist es somit möglich, zu ermitteln, dass sich die vertikal beweglichen Bremselemente in Form der Bremsbalken 20, 21 in ihrer abgesenkten Lage, d.h. in ihrer unteren Endlage, befinden. Somit wird mittels des Neigungssensors 50 auf vergleichsweise aufwandsarme Art und Weise eine zuverlässige Ermittlung der jeweiligen Lage der Bremsbalken 20, 21 ermöglicht.

Die Ermittlung der jeweiligen Lage der Bremsbalken 20, 21 kann einerseits durch den Neigungssensor 50 selbst erfolgen. Sofern der Neigungssensor 50 als Neigungsschalter ausgebildet ist, kann dieser beispielsweise derart ausgeführt sein, dass ab einen Neigungswinkel von 3° eine Schalthandlung ausgelöst wird, um ein Erreichen der unteren Endlage zu signalisieren.

Andererseits besteht auch die Möglichkeit, dass der Neigungssensor zum Übermitteln des zumindest einen Messwertes an eine Auswerte-Einrichtung ausgebildet ist. Dabei kann eine entsprechende Auswerte-Einrichtung entweder als Bestandteil der Gleisbremse in Form der Balkenbremse 10 oder auch als von dieser räumlich getrennte Komponente, etwa in Form einer Komponente einer Steuereinrichtung der Ablaufanlage, zu der die Balkenbremse 10 gehört, ausgebildet sein. In Abhängigkeit von den jeweiligen Umständen kann hierbei entweder eine drahtgebundene oder auch eine drahtlose Übertragung des zumindest einen Messwertes von dem Neigungssensor 50 an die Auswerte-Einrichtung erfolgen.

Figur 3 zeigt in einer schematischen Skizze ein zweites Ausführungsbeispiel der erfindungsgemäßen Gleisbremse in Form einer Gefälleausgleichsbremse 110 in einem aktiven Zustand. Die Gefälleausgleichsbremse 110 weist eine hydraulische Bremse beziehungsweise einen hydraulischen Bremszylinder 120 auf, der über eine Befestigung 130 mit einer Schiene 100 verbunden ist.

Gemäß der Darstellung der Figur 3 umfasst die Gefälleausgleichsbremse 110 weiterhin eine Absenkeinrichtung 140, mittels derer die hydraulische Bremse 120 aus der in der Figur 3 dargestellten Lage, in der die Gefälleausgleichsbremse 110 aktiv ist, in eine abgesenkte Lage beziehungsweise Position der hydraulischen Bremse 120, in der die Gefälleausgleichsbremse 110 inaktiv ist, überführbar ist.

Um nun die Lage des vertikal beweglichen Bremselements in Form der hydraulischen Bremse 120 im Betrieb der Gefälleausgleichsbremse 110 zuverlässig ermitteln und überwachen zu können, weist die Gefälleausgleichsbremse 110 zumindest einen Neigungssensor 150 auf. Dieser kann beispielsweise an der Absenkeinrichtung 140 vorgesehen werden, welche aufgrund einer Änderung ihrer Neigung in Abhängigkeit von der jeweiligen Lage der hydraulischen Bremse 120 eine Aussage über die jeweilige Lage der hydraulischen Bremse 120 erlaubt. Wie in der Figur 3 angedeutet, sind hierbei unterschiedliche Orte denkbar, an denen der Neigungssensor 150 alternativ angeordnet werden kann. Darüber hinaus ist es auch denkbar, dass an beiden in der Figur 3 dargestellten Positionen jeweils ein Neigungssensor 150 vorgesehen ist und diese unabhängig voneinander zur Erhöhung der Ausfallsicherheit und der Redundanz der Gefälleausgleichsbremse 110 Messwerte erfassen und einer Auswerte- und/oder einer Überwachungs-Einrichtung zuführen.

Figur 4 zeigt in einer schematischen Skizze die Gleisbremse gemäß dem Ausführungsbeispiel der Figur 3 in einem inaktiven Zustand. Im Vergleich zu Figur 3 wird hierbei deutlich, dass die hydraulische Bremse 120 in Figur 4 in eine solche Lage beziehungsweise Endlage abgesenkt ist, dass vorbeirollende Räder von Schienenfahrzeugen die Gefälleausgleichsbremse 110 wechselwirkungsfrei passieren. Entsprechend der Darstellung der Figur 4 erlaubt es hierbei der Neigungssensor 150 beziehungsweise erlauben es die mehreren Neigungssensoren 150 aufgrund der hiermit verbundenen Neigungsänderung der Absenkeinrichtung 140 aus der ermittelten Neigung die jeweilige Lage des vertikal beweglichen Bremselements in Form der hydraulischen Bremse 120 zu ermitteln.

Entsprechend den vorstehenden Ausführungen weisen die beschriebenen Ausführungsbeispiele der erfindungsgemäßen Gleisbremse sowie des erfindungsgemäßen Verfahrens insbesondere den Vorteil auf, dass mittels des Neigungssensors 50 beziehungsweise 150 ohne aufwändige zusätzliche konstruktive Maßnahmen eine zuverlässige Ermittlung der jeweiligen Lage des jeweiligen zumindest einen vertikal beweglichen Bremselements und damit auch des Betriebszustands der betreffenden Gleisbremse möglich ist.

## Patentansprüche

1. Gleisbremse (10; 110) mit zumindest einem vertikal beweglichen, insbesondere absenkbaren Bremselement (20, 21; 120),
**dadurch gekennzeichnet, dass** die Gleisbremse (10; 110) einen Neigungssensor (50; 150) aufweist, der derart angeordnet ist, dass anhand zumindest eines Messwertes des Neigungssensors (150) die jeweilige Lage des zumindest einen vertikal beweglichen Bremselements (20, 21; 120) ermittelbar ist.

2. Gleisbremse nach Anspruch 1,
**dadurch gekennzeichnet, dass** der Neigungssensor (50) an oder in einem sich von dem zumindest einen vertikal beweglichen Bremselement (20, 21; 120) unterscheidenden weiteren Element der Gleisbremse (10) angeordnet ist.

3. Gleisbremse nach Anspruch 1 oder 2,
**dadurch gekennzeichnet, dass** die Gleisbremse eine Balkenbremse (10) ist.

4. Gleisbremse nach Anspruch 3,
**dadurch gekennzeichnet, dass** der Neigungssensor (50) an oder in einem Federpaket (40) der Balkenbremse (10) angeordnet ist.

5. Gleisbremse nach Anspruch 1 oder 2,
**dadurch gekennzeichnet, dass** die Gleisbremse eine Gefälleausgleichsbremse (110) ist.

6. Gleisbremse nach Anspruch 5,
**dadurch gekennzeichnet, dass** der Neigungssensor (150) an oder in einer Absenkeinrichtung (140) der Gefälleausgleichsbremse (110) angeordnet ist.

7. Gleisbremse nach einem der vorangehenden Ansprüche,
**dadurch gekennzeichnet, dass** der Neigungssensor (50; 150) zum Übermitteln des zumindest einen Messwertes an eine Auswerte-Einrichtung ausgebildet ist.

8. Verfahren zum Ermitteln der jeweiligen Lage zumindest eines vertikal beweglichen, insbesondere absenkbaren Bremselements (20, 21; 120) einer Gleisbremse (10, 110),
**dadurch gekennzeichnet, dass**
- durch einen Neigungssensor (50, 150) zumindest ein Messwert erfasst wird und
- aus dem zumindest einen Messwert die jeweilige Lage des zumindest einen vertikal beweglichen Bremselements (20, 21; 120) ermittelt wird.

9. Verfahren nach Anspruch 8,
**dadurch gekennzeichnet, dass** der Messwert durch einen an oder in einem sich von dem zumindest einen vertikal beweglichen Bremselement (20, 21; 120) unterscheidenden weiteren Element der Gleisbremse (10, 110) angeordneten Neigungssensor (50, 150) erfasst wird.

10. Verfahren nach einem der Ansprüche 8 oder 9,
**dadurch gekennzeichnet, dass** die jeweilige Lage zumindest eines vertikal beweglichen Elements (20, 21) einer Gleisbremse in Form einer Balkenbremse (10) ermittelt wird.

11. Verfahren nach Anspruch 10,
**dadurch gekennzeichnet, dass** der zumindest eine Messwert durch einen an oder in einem Federpaket (40) der Balkenbremse (10) angeordneten Neigungssensor (50) erfasst wird.

12. Verfahren nach einem der Ansprüche 8 oder 9,
**dadurch gekennzeichnet, dass** die jeweilige Lage zumindest eines vertikal beweglichen Elements (120) einer Gleisbremse in Form einer Gefälleausgleichsbremse (110) ermittelt wird.

13. Verfahren nach Anspruch 12,
**dadurch gekennzeichnet, dass** der zumindest eine Messwert durch einen an oder in einer Absenkeinrichtung (140) der Gefälleausgleichsbremse (110) angeordneten Neigungssensor (150) erfasst wird.

14. Verfahren nach einem der Ansprüche 8 bis 13,
**dadurch gekennzeichnet, dass** der zumindest eine Messwert an eine Auswerte-Einrichtung übermittelt wird.

15. Verfahren nach Anspruch 14,
**dadurch gekennzeichnet, dass** ein die jeweilige Lage des zumindest einen vertikal beweglichen Elements (20, 21; 120) der Gleisbremse (10, 110) identifizierendes Signal von der Auswerte-Einrichtung an eine Überwachungs-Einrichtung übermittelt wird.

## Claims

1. Track brake (10;110) with at least one vertically-movable, especially lowerable, braking element (20,21;120),
**characterised in that**
the track brake (10; 110) has an inclination sensor (50;150) which is disposed such that, on the basis of at least one measured value of the inclination sensor (150), the respective position of the at least one vertically-movable braking element (20,21;120) is able to be determined.

2. Track brake according to claim 1,
**characterised in that**
the inclination sensor (50) is disposed on or in a further element of the track brake (10) which differs from the at least one vertically-movable braking element (20,21;120).

3. Track brake according to claim 1 or 2,
**characterised in that**
the track brake is a jaw-type brake (10).

4. Track brake according to claim 3,
**characterised in that**
the inclination sensor (50) is disposed on or in a spring package (40) of the jaw-type brake (10).

5. Track brake according to claim 1 or 2,
**characterised in that** the track brake is a gradient compensation brake (110).

6. Track brake according to claim 5,
**characterised in that**
the inclination sensor (150) is disposed on or in a lowering device (140) of the gradient compensation brake (110).

7. Track brake according to one of the preceding claims,
**characterised in that**
the inclination sensor (50;150) is embodied to transfer the at least one measured value to an evaluation device.

8. Method for determining the respective position of at least one vertically-movable, especially lowerable, braking element (20,21;120) of a track brake (10,110),
**characterised in that**
- at least one measured value is detected by an inclination sensor (50,150) and
- the respective position of the at least one vertically-movable braking element (20,21;120) is determined from the at least one measured value.

9. Method according to claim 8,
**characterised in that** the measured value is detected by an inclination sensor (50,150) disposed on or in a further element of the track brake (10,110) which differs from the at least one vertically-movable braking element (20,21;120).

10. Method according to one of claims 8 or 9,
**characterised in that** the respective position of at least one vertically-movable element (20,21) of a track brake in the form of a jaw-type brake (10) is determined.

11. Method according to claim 10,
**c h a r a c t e r i s e d** in that the at least one measured value is detected by an inclination sensor (50) disposed on or in a spring package (40) of the jaw-type brake (10).

12. Method according to one of claims 8 or 9,
**characterised in that** the respective position of at least one vertically-movable element (120) of a track brake in the form of a gradient compensation brake (110) is determined.

13. Method according to claim 12,
**characterised in that** that the at least one measured value is detected by an inclination sensor (50) disposed on or in the lowering device (140) of the gradient compensation brake (110).

14. Method according to one of claims 8 to 13,
**characterised in that**
the at least one measured value is transferred to an evaluation device.

15. Method according to claim 14,
**characterised in that**
a signal identifying the respective position of the at least one vertically-movable element (20, 21; 120) of the track brake (10, 110) is transferred from the evaluation device to a monitoring device.

## Revendications

1. Frein (10; 110) de voie comprenant au moins un élément (20, 21; 120) de freinage mobile verticalement, pouvant être notamment abaissé,
**caractérisé en ce que** le frein (10; 110) de voie a un capteur (50; 150) d'inclinaison, qui est disposé de manière à pouvoir déterminer à l'aide d'au moins une valeur de mesure du capteur (150) d'inclinaison la position respective du au moins un élément (20, 21; 120) de freinage mobile verticalement.

2. Frein de voie suivant la revendication 1,
**caractérisé en ce que**
le capteur (50) d'inclinaison est disposé sur ou dans un autre élément du frein (10) de voie se distinguant du au moins un élément (20, 21; 120) de freinage mobile verticalement.

3. Frein de voie suivant la revendication 1 ou 2,
**caractérisé en ce que**
le frein de voie est un frein (10) à mâchoires.

4. Frein de voie suivant la revendication 3,
**caractérisé en ce que**
le capteur (50) d'inclinaison est disposé sur ou dans un paquet (40) de ressorts du frein (10) à mâchoires.

5. Frein de voie suivant la revendication 1 ou 2,
**caractérisé en ce que**
le frein de voie est un frein (110) à compensation de maintien.

6. Frein de voie suivant la revendication 5,
**caractérisé en ce que**
le capteur (150) d'inclinaison est disposé sur ou dans un dispositif (140) d'abaissement du frein (110) à compensation de maintien.

7. Frein de voie suivant l'une des revendications précédentes,
**caractérisé en ce que**
le capteur (50; 150) d'inclinaison est constitué pour transmettre la au moins une valeur de mesure à un dispositif d'exploitation.

8. Procédé de détermination de la position respective d'au moins un élément (20, 21; 120) de freinage mobile verticalement, en pouvant notamment être abaissé, d'un frein (10; 110) de voie,
**caractérisé en ce que**
- on détecte au moins une valeur de mesure par un capteur (50; 150) d'inclinaison et
- on détermine la position respective du au moins un élément (20, 21; 120) de freinage mobile verticalement à partir de la au moins une valeur de mesure.

9. Procédé suivant la revendication 8,
**caractérisé en ce que**
on détecte la valeur de mesure par un capteur (50; 150) d'inclinaison disposé sur ou dans un autre élément du frein (10; 110) de voie se distinguant du au moins un élément (20, 21; 120) de freinage mobile verticalement.

10. Procédé suivant l'une des revendications 8 ou 9,
**caractérisé en ce que**
on détermine la position respective d'au moins un élément (20, 21) mobile verticalement d'un frein de voie sous la forme d'un frein (10) à mâchoires.

11. Procédé suivant la revendication 10,
**caractérisé en ce que**
on détecte la au moins une valeur de mesure par un capteur (50) d'inclinaison disposé sur ou dans un paquet (40) de ressorts du frein (10) à mâchoires.

12. Procédé suivant l'une des revendications 8 ou 9,
**caractérisé en ce que**
on détermine la position respective d'au moins un élément (120) mobile verticalement d'un frein de voie sous la forme d'un frein (110) à compensation de maintien.

13. Procédé suivant la revendication 12,
**caractérisé en ce que**
on détecte la au moins une valeur de mesure par un capteur (150) d'inclinaison disposé sur ou dans un dispositif (140) d'abaissement du frein (110) de compensation de maintien.

14. Procédé suivant l'une des revendications 8 à 13,
**caractérisé en ce que**
on transmet la au moins une valeur de mesure à un dispositif d'exploitation.

15. Procédé suivant la revendication 14,
**caractérisé en ce que**
on transmet du dispositif d'exploitation à un dispositif de contrôle un signal définissant la position respective du au moins un élément (20, 21; 120) mobile verticalement du frein (10; 110) de voie.
